# EUROPÄISCHE PATENTANMELDUNG

(11) **EP 4 617 086 A1**
(43) Veröffentlichungstag der Anmeldung: **17.09.2025**
(21) Anmeldenummer: 24163158.9
(22) Anmeldetag: 13.03.2024
(51) Int. Cl.: B60F 1/04, B61C 15/02

(54) **FAHRZEUG FÜR DEN BETRIEB AUF SCHIENEN**

(71) Anmelder: XCMG European Research Center GmbH, 47807 Krefeld (DE)
(72) Erfinder: Bieber, Dustin, 47807 Krefeld (DE); Tolksdorf, Detlef, 45141 Essen (DE)
(74) Vertreter: Dr. Stark & Partner Patentanwälte mbB

(57) **Zusammenfassung**

Die Erfindung betrifft ein Fahrzeug (1) für den Betrieb auf Schienen (5), vorzugsweise Zweiwegefahrzeug, umfassend ein Fahrgestell (2) und zumindest zwei an diesem Fahrgestell (2) aufgehängte, für den Betrieb auf Schienen (5) geeignete und mittels zumindest eines Antriebs antreibbare und/oder mittels wenigstens einer Bremsvorrichtung bremsbare Schienenradpaare (4) mit jeweils zwei Schienenrädern (3). Um ein Fahrzeug (1), mittels welchem sowohl Antrieb als auch Bremsen eines Fahrzeugs (1) während eines Betriebs auf Schienen (5) energieeffizient und Verschleißarm durchführbar ist zu schaffen, soll ein Fahrzeug (1) angegeben werden, wobei wenigstens einem Schienenrad (3), vorzugsweise jedem Schienenrad (3) eines Schienenradpaares (4), und besonders bevorzugt jedem Schienenrad (3), jeweils zumindest eine Vorrichtung (6) zur Erhöhung der Haftung des Fahrzeugs (1) auf der entsprechenden Schiene (5) zugeordnet ist, die für eine zeitweise Erhöhung der Haftung zwischen einem deaktivierten Zustand und einem aktivierten Zustand umschaltbar ist, und die eine an dem Fahrgestell (2) angeordnete Reibradaufhängung (9) mit einem daran aufgehängten Reibrad (10) mit umlaufender Lauffläche (11) umfasst, wobei das Reibrad (10) einerseits zumindest im aktivierten Zustand der Vorrichtung (6) einen mit seiner Lauffläche (11) an die entsprechende Schiene (5) angepresst ist und außerdem durch ein Getriebe (12) unmittelbar oder mittelbar mit dem Schienenrad (3), dem das Reibrad (10) zugeordnet ist, derart mechanisch gekoppelt ist, dass das Schienenrad (3) und das ihm zugeordnete Reibrad (10) jeweils dieselbe Bahngeschwindigkeit und dieselbe Drehrichtung haben, und wobei das Reibrad (10) andererseits im deaktivierten Zustand der Vorrichtung (6) entweder nicht an der entsprechenden Schiene (5) anliegt und/oder nicht durch das Getriebe (12) angetrieben ist.

## Beschreibung

Die Erfindung betrifft ein Fahrzeug für den Betrieb auf Schienen, vorzugsweise Zweiwegefahrzeug, umfassend ein Fahrgestell und zumindest zwei an diesem Fahrgestell aufgehängte, für den Betrieb auf Schienen geeignete und mittels zumindest eines Antriebs antreibbare und/oder mittels wenigstens einer Bremsvorrichtung bremsbare Schienenradpaare mit jeweils zwei Schienenrädern.

Aus der Praxis sind Fahrzeuge für den Betrieb auf Schienen, insbesondere Zweiwegefahrzeuge bekannt, die ein Fahrgestell mit vier an diesem Fahrgestell aufgehängten Schienenrädern aufweisen. Diese Schienenräder sind üblicherweise aus Stahl gefertigt und liegen bei einem Betrieb des Fahrzeuges auf Schienen dann auf den Schienen auf. Für Vortrieb und/oder Bremsen des Fahrzeuges werden bei Zweiwegefahrzeugen in der Praxis üblicherweise ebenfalls an dem Fahrgestell aufgehängte Straßenräder, insbesondere Reifen, verwendet. Hierbei werden beispielsweise auch die Straßenräder mit den Schienen in Kontakt gebracht und angetrieben bzw. gebremst. Es ist ebenfalls in der Praxis bekannt, die Schienenräder direkt anzutreiben. Dies ist bei reinen Schienenfahrzeugen ohnehin der Fall.

Nachteilig hierbei ist, dass einerseits die Straßenräder einen hohen Verschleiß aufweisen, wenn sie mit den Schienen in Kontakt gebracht werden, um Vortrieb oder Bremsen des Fahrzeuges zu bewirken. Dies folgt beispielsweise daraus, dass die Straßenräder eine Lauffläche aufweisen, die wesentlich breiter ist als die Lauffläche der Schienen. Bei einer Belastung der Straßenräder auf den Schienen beschädigen die Schienen so die Straßenräder, da ein schmaler Bereich anders belastet wird als der Rest der Breite des entsprechenden Straßenrades. Andererseits ist bei einem direkten Antrieb oder Bremsen der Schienenräder nachteilig, dass diese lediglich einen geringen Reibungskoeffizienten aufweisen und daher nur schlecht auf den Schienen, welche ebenfalls einen geringen Reibungskoeffizienten aufweisen, haften. Je nach den Umgebungsparametern kann die Haftung somit unzureichend sein oder aber zumindest der Wunsch nach einer verbesserten Haftung bestehen.

Aufgabe der Erfindung ist es, die vorgenannten Nachteile zu vermeiden und ein Fahrzeug anzugeben, mittels welchem sowohl Antrieb als auch Bremsen eines Fahrzeugs während eines Betriebs auf Schienen energieeffizient und verschleißarm durchführbar ist.

Diese Aufgabe wird bei einem gattungsgemäßen Fahrzeug dadurch gelöst, dass wenigstens einem Schienenrad, vorzugsweise jedem Schienenrad eines Schienenradpaares, und besonders bevorzugt jedem Schienenrad, jeweils zumindest eine Vorrichtung zur Erhöhung der Haftung des Fahrzeugs auf der entsprechenden Schiene zugeordnet ist, die für eine zeitweise Erhöhung der Haftung zwischen einem deaktivierten Zustand und einem aktivierten Zustand umschaltbar ist, und die eine an dem Fahrgestell angeordnete Reibradaufhängung mit einem daran aufgehängten Reibrad mit umlaufender Lauffläche umfasst, wobei das Reibrad einerseits zumindest im aktivierten Zustand der Vorrichtung mit seiner Lauffläche an die entsprechende Schiene angepresst ist und außerdem durch ein Getriebe unmittelbar oder mittelbar mit dem Schienenrad, dem das Reibrad zugeordnet ist, derart mechanisch gekoppelt ist, dass das Schienenrad und das ihm zugeordnete Reibrad jeweils dieselbe Bahngeschwindigkeit und dieselbe Drehrichtung haben, und wobei das Reibrad andererseits im deaktivierten Zustand der Vorrichtung entweder nicht an der entsprechenden Schiene anliegt und/oder nicht durch das Getriebe angetrieben ist.

Ein Zweiwegefahrzeug kann beispielsweise ein Zweiwegebagger, ein Zweiwege-Rangierfahrzeug, ein Zweiwege-Universal-Fahrzeug oder ein Zweiwegekran sein. Unter einem Zweiwegefahrzeug wird insbesondere ein Fahrzeug verstanden, das sowohl auf Schienen als auch auf der Straße betrieben, insbesondere gefahren, werden kann. Ein Zweiwegefahrzeug kann beispielsweise vier Stra-ßenräder, beispielsweise Räder mit Gummireifen, für den Betrieb auf der Stra-ße aufweisen und zudem vier zeitweise zuschaltbare Schienenräder aus Stahl für den Betrieb auf Schienen aufweisen. Die Schienenräder können beispielsweise mittels eines hydraulischen oder pneumatischen Antriebs aus einer erhöhten Position auf Schienen herabgesenkt werden und anschließend mittels desselben Antriebs das Zweiwegefahrzeug soweit anheben, dass die Straßenräder keinen Kontakt mehr mit dem Untergrund haben. Alternativ kann die Konstruktion auch umgekehrt ausgebildet sein. Als Antrieb kann beispielsweise ein Verbrennungsmotor oder ein Elektromotor eingesetzt werden, wobei auch Hybridlösungen möglich sind. Als Bremseinrichtung können beispielsweise eine oder mehrere Scheibenbremsen oder eine oder mehrere Trommelbremsen, ein oder mehrere Bremsklötze oder auch elektromagnetische Bremssysteme wie beispielsweise Wirbelstrombremsen eingesetzt werden.

Ein Schienenradpaar kann aus zwei Schienenrädern bestehen, die an einer gemeinsamen Achse aufgehängt sind. Es ist ebenfalls möglich, dass die zwei Schienenräder eines Schienenradpaares jeweils einzeln aufgehängt sind.

Ein Reibrad einer Vorrichtung zur Erhöhung der Haftung des Fahrzeugs auf der entsprechenden Schiene kann beispielsweise ein Rad aus Vollgummi sein. Es ist ebenfalls möglich, dass ein Reibrad beispielsweise mit einer Stahlfelge und einem Gummireifen ausgebildet ist. Ein Reibrad kann einen wesentlich geringeren Durchmesser aufweisen als ein Schienenrad.

Ein Reibrad kann beispielsweise eine Lauffläche mit einem Reibkoeffizienten aufweisen, der höher ist als der Reibkoeffizient des Schienenrades. Ein Beispiel hierfür wäre ein aus Vollgummi gefertigtes Reibrad. Es ist auch möglich, dass die Lauffläche eines Reibrades einen identischen oder niedrigeren Reibungskoeffizienten aufweist. Durch ein Reibrad mit einem erhöhten Reibungskoeffizienten kann eine stärkere Haftungserhöhung erzielt werden.

Eine Reibradaufhängung kann an dem Fahrgestell beispielsweise schwenkbar oder starr befestigt sein. Zudem kann eine Reibradaufhängung teleskopierbar sein und/oder aus mehreren Gliedern bestehen. Eine Reibradaufhängung kann beispielsweise als, vorzugsweise geschwungener, Arm oder auch als Steg ausgebildet sein und beispielsweise aus Stahl gefertigt sein. Es ist möglich, dass eine Reibradaufhängung beispielsweise einen Steg aus Stahl, der starr mit dem Fahrgestell verbunden ist, und einen schwenkbar gelagerten, teleskopierbaren, Zylinder aufweist.

Im aktivierten Zustand ist das Reibrad an eine Schiene angepresst. Ein Reibrad kann beispielsweise mittels eines hydraulischen oder pneumatischen teleskopierbaren Zylinders an eine Schiene gepresst werden. Ein solcher Zylinder kann beispielsweise Bestandteil einer Reibradaufhängung sein. Es ist ebenfalls möglich, dass das Reibrad mittels eines Motors und eines Gelenks gegen eine Schiene gepresst wird.

Zudem ist im aktivierten Zustand ein Laufrad mittels eines Getriebes mit dem Schienenrad mechanisch gekoppelt, sodass das Reibrad auf der Schiene mit derselben Umlaufgeschwindigkeit abrollt wie das entsprechende Schienenrad. Das Reibrad haftet insofern an der Schiene und übt, identisch mit dem Schienenrad, je nach Einsatzsituation entweder einen Vortrieb oder eine Bremswirkung aus. Dadurch wird die Haftung des Fahrzeuges auf den Schienen erhöht. Insbesondere durch die Anpresskraft, mit welcher das entsprechende Reibrad an die entsprechende Schiene gedrückt wird, sowie durch den Reibungskoeffizienten der Lauffläche eines Reibrades ist die entstehende Haftungserhöhung beeinflusst. Ein höherer Reibungskoeffizient kann zu einer erhöhten Haftung führen. Eine erhöhte Anpresskraft kann ebenfalls zu einer erhöhten Haftung führen. Zudem können mehrere Reibräder eingesetzt werden.

Im deaktivierten Zustand kann ein Reibrad beispielsweise nicht in Kontakt mit einer Schiene sein. Es kann sich beispielsweise im "Leerlauf" befinden, wobei es weiter durch das Getriebe angetrieben wird, aber keinen Kontakt mit der entsprechenden Schiene hat. Zudem kann ein Reibrad im deaktivierten Zustand beispielsweise nicht mit dem entsprechenden Schienenrad mechanisch gekoppelt sein und sich insofern nicht drehen. Hierbei kann das Reibrad beispielweise weiterhin im Kontakt mit der Schiene sein, jedoch keine Kraft wie Antrieb oder Bremse darauf wirken. Es läuft insofern einfach "mit". Es ist auch möglich, dass ein Reibrad im deaktivierten Zustand weder in Kontakt mit einer Schiene ist noch mechanisch mit dem entsprechenden Schienenrad gekoppelt ist.

Als eine einem Reibrad entsprechende Schiene wird eine solche Schiene bezeichnet, auf der das Schienenrad, dem dieses Reibrad zugeordnet ist, aufsteht.

Zumindest eine Vorrichtung kann zwischen einer Ruheposition, in der sie sich im nicht aktivierten Zustand befindet, und einer Einsatzposition, in der sie sich im aktivierten Zustand befindet, verlagerbar sein, wobei das Reibrad bei der Einsatzposition an der entsprechenden Schiene anliegt und bei der Ruheposition nicht an der entsprechenden Schiene anliegt. Die Einsatzposition entspricht insofern der Position des aktivierten Zustandes, wobei eine Anpresskraft des Reibrades an die Schiene ausgeübt wird. Die Ruheposition entspricht insofern der Position des deaktivierten Zustandes, wenngleich ein Reibrad auch im deaktivierten Zustand an einer Schiene anliegen kann.

Weiterhin kann bei wenigstens einer Vorrichtung für die Verlagerung der Reibradaufhängung zwischen Ruheposition und Einsatzposition ein Verlagerungsantrieb vorgesehen sein. Ein solcher Verlagerungsantrieb kann beispielweise ein Elektromotor sein, welcher einen Arm, beispielsweise eine Reibradaufhängung, verschwenkt oder eine Spindelstange translatorisch verfährt. Ein Verlagerungsantrieb kann aber auch ein hydraulischer oder pneumatischer Zylinder sein. Ein Antrieb kann unmittelbar oder mittelbar auf zumindest ein Reibrad einwirken.

Zudem kann der Verlagerungsantrieb die Anpresskraft des entsprechenden Reibrads bewirken und vorzugsweise die Anpresskraft des entsprechenden Reibrads durch den Verlagerungsantrieb anpassbar sein. Beispielsweise kann ein Verlagerungsantrieb als hydraulischer Zylinder ausgebildet sein und das Reibrad direkt am beweglichen Teil dieses Zylinders angeordnet sein. So kann durch ein Ausfahren des Zylinders das Reibrad beispielweise direkt auf eine Schiene gepresst werden. Durch eine Einstellung des Verlagerungsantriebes, i. e. des hydraulischen Antriebs, kann in diesem Beispiel auch die Anpresskraft des entsprechenden Reibrades angepasst werden.

Wenigstens eine Reibradaufhängung kann schwenkbar und/oder teleskopierbar ausgeführt sein. Eine Reibradaufhängung kann beispielweise aus mehreren Gliedern bestehen. Ein Glied kann beispielsweise als geschwungener Arm oder auch als Steg ausgebildet sein und vorzugsweise aus Stahl bestehen. Es ist möglich, dass eine Reibradaufhängung beispielsweise einen Steg aus Stahl, der starr mit dem Fahrgestell verbunden ist, und einen an diesem Steg schwenkbar gelagerten, teleskopierbaren, Zylinder aufweist.

Es kann eine Steuereinheit vorgesehen sein, die mit zumindest einem Verlagerungsantrieb derart verbunden ist, dass dieser Verlagerungsantrieb durch diese Steuereinheit ansteuerbar ist. Insofern kann durch die Steuereinheit die Anpresskraft verändert werden und zwischen aktiviertem und nicht aktiviertem Zustand gewechselt werden. Die Steuereinheit kann beispielsweise einen als Elektromotor ausgebildeten Verlagerungsantrieb ansteuern oder die Ventile eines als hydraulischen Zylinder ausgebildeten Verlagerungsantriebes. Mittels einer solchen Steuereinheit kann beispielsweise eine Vorrichtung entsprechend zwischen ihrer Ruheposition und ihrer Einsatzposition verlagert werden. Zudem kann mittels einer solchen Steuereinheit die Anpresskraft des Reibrades verändert werden.

Weiterhin kann eine mit der Steuereinheit verbundene Recheneinheit vorgesehen sein, und es kann wenigstens eine mit der Recheneinheit verbundene Sensoreinheit vorgesehen sein, wobei zum einen zumindest eine Sensoreinheit zur Ermittlung von Betriebsparametern ausgebildet sein kann und zum anderen die Recheneinheit zur Ermittlung von Sollwerten für die Steuereinheit ausgebildet sein kann, und wobei die Ermittlung von Sollwerten abhängig von den durch die Sensoreinheit erfassten Betriebsparametern erfolgen kann. Durch eine derartige Ausgestaltung kann die Steuereinheit abhängig von verschiedenen Betriebsparametern beispielsweise die Anpresskraft eines Reibrades erhöhen oder eine Vorrichtung in ihre Ruheposition verlagern. Als Betriebsparameter in Frage kommen beispielsweise die ausgeübte Aktor-Kraft bzw. die Anpresskraft eines Reibrades, die Umgebungs- und Schienentemperatur, relative Feuchte, Neigungswinkel der Schienen, Drehzahl eines Schienenrads und Drehzahl eines Reibrads oder die Bodengeschwindigkeit bzw. die Geschwindigkeit des Fahrzeuges. Weitere Betriebsparameter können beispielsweise auch Vorgaben betreffend den Fahrzustand sein, wie z. B. ein Input des Fahrzeugführers wie beispielsweise die Fahrpedalposition oder beim autonomen Fahren eine Steuergröße eines Fahrsystems.

Eine Sensoreinheit kann Sensoren zur Ermittlung des jeweiligen Betriebsparameters umfassen. So kann eine Sensoreinheit beispielsweise Feuchtesensoren, optische oder GPS-basierte Geschwindigkeitssensoren und/oder Drehgeber umfassen. Ein Sollwert für die Steuereinheit kann insbesondere die einzustellende Anpresskraft sein. Ein Sollwert kann ebenfalls ein Umschalten zwischen aktiviertem und nicht aktiviertem Zustand betreffen bzw. umfassen. Beispielsweise kann eine Recheneinheit eine durch die Steuereinheit einzustellende Anpresskraft als Sollwert unter Berücksichtigung der relativen Feuchte und der Neigung der entsprechenden Schiene berechnen und an die Steuereinheit weitergeben.

Außerdem kann durch eine Sensoreinheit oder mehrere Sensoreinheiten ein Schlupf festgestellt werden. Wenn die Umfangsgeschwindigkeit größer ist als die Fahrgeschwindigkeit, was insbesondere beim Beschleunigen oder beim Hochfahren einer Steilstrecke der Fall sein kann, dann wird dies bei hohen Schlupfwerten auch als "Schleudern" bezeichnet. Ist hingegen die Umfangsgeschwindigkeit geringer als die Fahrgeschwindigkeit, so wird dies bei hohen Schlupfwerten als "Gleiten" bezeichnet. Dies kann insbesondere beim Bremsvorgang der Fall sein. Häufig ist das "Schleudern" problematischer, weil üblicherweise zwar alle Schienenräder bremsen können, aber nur eine begrenzte Anzahl der Schienenräder als Antrieb ausgebildet sind.

Zur Bewertung der erfassten Sensorwerte kann beispielsweise das Verhältnis der abgegebenen Antriebsleistung zur Drehzahländerung der Antriebsräder und/oder ein Vergleich der Achsgeschwindigkeiten untereinander herangezogen werden. Falls die Werte von einem vordefinierten Wertebereich abweichen, kann eine Aktivierung bzw. Deaktivierung der Vorrichtung erfolgen.

Bei wenigstens einem Reibrad kann der Reibungskoeffizient der Lauffläche höher sein als bei dem Schienenrad, dem dieses Reibrad zugeordnet ist. Durch ein Reibrad mit einem derart erhöhten Reibungskoeffizienten kann eine besonders große Haftungserhöhung erzielt werden. Der Reibungskoeffizient kann auch als Haftungskoeffizient oder als Haftungsbeiwert bezeichnet werden.

Bei wenigstens einem Reibrad kann die Lauffläche zumindest teilweise mit einer den Reibungskoeffizienten der Lauffläche erhöhenden Beschichtung versehen sein oder durch eine solche Beschichtung gebildet sein. Eine solche Beschichtung kann beispielsweise aus Gummi sein. Eine Beschichtung hat insbesondere den Vorteil, dass sie nach Verschleiß erneuerbar ist.

Bei wenigstens einem Reibrad kann zumindest die Lauffläche dieses Reibrads aus Gummi bestehen und/oder durch eine Beschichtung, wie z. B. einer Gummibeschichtung, gebildet sein.

Zudem kann zumindest ein Getriebe ein eine Lauffläche aufweisendes Getrieberad umfassen, wobei das Getrieberad zumindest im aktivierten Zustand der Vorrichtung mit seiner Lauffläche einerseits an der Lauffläche des entsprechenden Schienenrads anliegt und andererseits an der Lauffläche des entsprechenden Reibrads anliegt, so dass das Reibrad dann über das Getrieberad mit dem Schienenrad kraftschlüssig gekoppelt ist. Insofern kann das Getrieberad einen Kraftschluss zwischen dem Schienenrad und dem Reibrad herstellen. Durch eine derartige Ausgestaltung kann sichergestellt werden, dass das Schienenrad und das entsprechende Reibrad die gleiche Laufrichtung und dieselbe Bahngeschwindigkeit aufweisen. Zudem kann eine geringe Komplexität gewährleistet werden. Das entsprechende Schienenrad ist das Schienenrad, welches mittels dieses Getriebes mit dem entsprechenden Reibrad gekoppelt wird.

Zumindest ein Getriebe kann einen Riemen umfassen, und sowohl das entsprechende Reibrad als auch das entsprechende Schienenrad, dem das Reibrad zugeordnet ist, kann jeweils mit einer geeigneten Riemen-Lauffläche versehen oder gekoppelt sein, auf der der Riemen zumindest im aktivierten Zustand der Vorrichtung jeweils läuft, so dass das Reibrad dann über den Riemen mit dem Schienenrad kraftschlüssig gekoppelt ist. Ein Riemen kann beispielsweise ein Zahnriemen und/oder ein Flachriemen oder Keilriemen sein. Insofern kann der Riemen einen Kraftschluss oder einen Formschluss zwischen dem Schienenrad und dem Reibrad herstellen. Durch eine derartige Ausgestaltung kann sichergestellt werden, dass das Schienenrad und das entsprechende Reibrad die gleiche Laufrichtung und dieselbe Bahngeschwindigkeit aufweisen. Zudem kann eine geringe Komplexität gewährleistet werden.

Weiterhin kann zumindest ein Getriebe als Zahnradgetriebe ausgebildet sein, und es kann sowohl das entsprechende Reibrad als auch das entsprechende Schienenrad, dem das Reibrad zugeordnet ist, jeweils mit einem geeigneten Zahnrad, das auch als ein Zahnkranz ausgebildet sein kann, versehen oder gekoppelt sein, auf denen das Zahnradgetriebe zumindest im aktivierten Zustand der Vorrichtung jeweils läuft, so dass das Reibrad dann über das Zahnradgetriebe mit dem Schienenrad formschlüssig gekoppelt ist.

Die Lauffläche wenigstens eines Reibrads kann im aktivierten Zustand an der Lauffläche der entsprechenden Schiene angepresst sein. Insofern läuft das Reibrad fluchtend zu dem entsprechenden Schienenrad. Die Anpresskraft hat dieselbe Ausrichtung wie die Gewichtskraft des Schienenrades.

Die Lauffläche wenigstens eines Reibrads kann im aktivierten Zustand an einer Flanke der entsprechenden Schiene angepresst sein. Insofern läuft das Reibrad orthogonal zu dem entsprechenden Schienenrad. Die Anpresskraft ist orthogonal zur Gewichtskraft des Schienenrades ausgerichtet.

Auch kann die Lauffläche wenigstens eines Reibrads im aktivierten Zustand an die Lauffläche der entsprechenden Schiene und eine Flanke der entsprechenden Schiene angepresst sein. Insofern läuft das Reibrad dann diagonal zu dem entsprechenden Schienenrad. Die Lauffläche des Reibrads kann insoweit dann eine v-förmige umlaufende Nut als Lauffläche aufweisen.

Weiterhin kann der Durchmesser wenigstens eines Reibrads 5 % bis 50 %, vorzugsweise 10 % bis 25 %, besonders bevorzugt 15 % bis 20 %, des Durchmessers des entsprechenden Schienenrads, dem das Reibrad zugeordnet ist, betragen.

Wenigstens eine Vorrichtung kann mehr als einem Schienenrad zugeordnet sein. Insofern kann beispielsweise eine Vorrichtung einem Schienenradpaar zugeordnet sein.

Im Folgenden werden in den Zeichnungen dargestellte Ausführungsbeispiele der Erfindung erläutert. Es zeigen:
- Fig. 1: einen Ausschnitt einer perspektivischen Ansicht eines ersten Ausführungsbeispiels eines erfindungsgemäßen Fahrzeuges,
- Fig. 2: einen Ausschnitt des Gegenstandes nach Fig. 1 in einer Seitenansicht,
- Fig. 3: einen Ausschnitt einer perspektivischen Ansicht eines zweiten Ausführungsbeispiels eines erfindungsgemäßen Fahrzeuges,
- Fig. 4: einen Ausschnitt einer perspektivischen Ansicht eines weiteren Ausführungsbeispiels eines erfindungsgemäßen Fahrzeuges und
- Fig. 5: einen Ausschnitt des Gegenstandes nach Fig. 4 in einer Seitenansicht.

In allen Figuren werden für gleiche bzw. gleichartige Bauteile übereinstimmende Bezugszeichen verwendet.

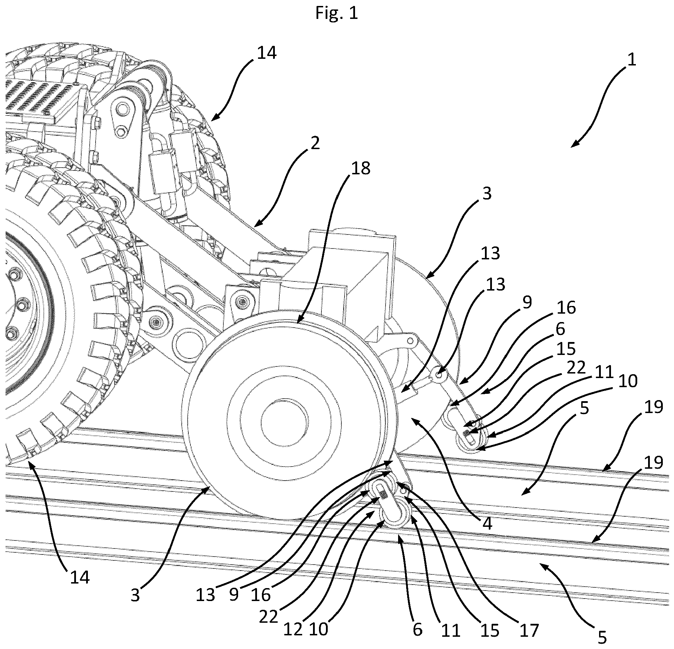

Fig. 1 zeigt ein als Zweiwegefahrzeug ausgebildetes Fahrzeug 1 für den Betrieb auf Schienen 5. Das Fahrzeug 1 umfasst ein Fahrgestell 2 und weist an dem Fahrgestell 2 aufgehängte Schienenräder 3 auf, wobei in dem Zeichnungsausschnitt lediglich zwei Schienenräder 3 gezeigt sind. Die Schienenräder 3 sind dabei als ein Schienenradpaar 4 ausgebildet und jeweils auf einer Schiene 5 angeordnet und dementsprechend für den Betrieb auf Schienen 5 geeignet. Zudem sind die Schienenräder 3 mittels eines in der Zeichnung nicht dargestellten Antriebs antreibbar und mittels einer in der Zeichnung ebenfalls nicht dargestellten Bremsvorrichtung bremsbar. Das Fahrzeug 1 weist überdies Straßenräder 14 auf, wobei in dem Zeichnungsausschnitt lediglich zwei Stra-ßenräder 14 gezeigt sind. Üblicherweise sind jeweils mindestens vier Schienenräder 3 und jeweils mindestens vier Straßenräder 14 vorhanden.

Den Schienenrädern 3 ist jeweils eine Vorrichtung 6 zur Erhöhung der Haftung des Fahrzeugs 1 auf der entsprechenden Schiene 5 zugeordnet. Die Vorrichtungen 6 sind für eine zeitweise Erhöhung der Haftung zwischen einem deaktivierten Zustand und einem aktivierten Zustand umschaltbar. Jede Vorrichtung 6 umfasst eine an dem Fahrgestell 2 angeordnete Reibradaufhängung 9 mit einem daran aufgehängten Reibrad 10. Jedes Reibrad 10 umfasst eine umlaufende Lauffläche 11, die beispielsweise aus Gummi ausgebildet sein kann.

Im aktivierten Zustand einer Vorrichtung 6 ist das entsprechende Reibrad 10 einerseits mit seiner Lauffläche 11 an die entsprechende Schiene 5 angepresst. Die entsprechende Schiene 5 ist dabei jene Schiene 5, auf der das entsprechende Schienenrad 3 aufsteht. Das entsprechende Schienenrad 3 ist jenes Schienenrad 3, mit welchem das jeweilige Reibrad 10 mechanisch gekoppelt ist. Andererseits ist das Reibrad 10 im aktivierten Zustand durch ein Getriebe 12 unmittelbar mit dem entsprechenden Schienenrad 3, dem das Reibrad 10 zugeordnet ist, mechanisch gekoppelt. Das Reibrad 10 ist dabei derart mechanisch mit dem entsprechenden Schienenrad 3 gekoppelt, dass das Schienenrad 3 und das Reibrad 10 jeweils dieselbe Bahngeschwindigkeit und dieselbe Drehrichtung haben.

Im deaktivierten Zustand einer Vorrichtung 6 ist das entsprechende Reibrad 10 entweder nicht an der entsprechenden Schiene 5 anliegend und/oder nicht durch das Getriebe 12 angetrieben. Das entsprechende Reibrad 10 kann sich beispielsweise im "Leerlauf" befinden, wobei es weiter durch das Getriebe 12 angetrieben wird, aber keinen Kontakt mit der entsprechenden Schiene 5 hat. Auch kann ein Reibrad 10 im deaktivierten Zustand beispielsweise nicht mit dem entsprechenden Schienenrad 3 mechanisch gekoppelt sein und sich insofern nicht drehen. Hierbei kann das Reibrad 10 beispielweise weiterhin in Kontakt mit der entsprechenden Schiene 5 sein, jedoch keine Kraft wie Antrieb oder Bremse darauf wirken. Es läuft insofern einfach "mit". Es kann aber auch keinen Kontakt zur entsprechenden Schiene 5 haben.

In Fig. 1 ist die Vorrichtung 6 des hinteren Schienenrads 3 im deaktivierten Zustand. Insofern hat diese Vorrichtung 6 bzw. das Reibrad 10 dieser Vorrichtung 6 keinen Kontakt mit der entsprechenden Schiene 5. Die Vorrichtung 6 des vorderen Schienenrads 3 ist im aktivierten Zustand. Insofern hat diese Vorrichtung 6 bzw. das Reibrad 10 dieser Vorrichtung 6 einerseits Kontakt mit der entsprechenden Schiene 5 und ist andererseits mittels des Getriebes 12 mechanisch mit dem entsprechenden Schienenrad 3 gekoppelt.

Jede Reibradaufhängung 9 ist mehrgliedrig ausgestaltet und umfasst insofern mehrere Glieder 13. Jede Reibradaufhängung 9 ist verschwenkbar ausgeführt. Ein erstes Glied 13 der Reibradaufhängung 9, welches an dem Fahrgestell 2 zumindest in geringem Maße verschwenkbar angeschlagen ist, ist als teleskopierbarer Zylinder ausgestaltet. An diesem ersten Glied 13 ist ein zweites Glied 13 angeordnet, welches als zumindest leicht geschwungener Arm ausgestaltet ist. Dieses zweite Glied 13 ist mit seinem einen Ende direkt oder - wie im gezeigten Ausführungsbeispiel über ein weiteres Bauteil - an dem Fahrgestell 2 verschwenkbar angeschlagen. Während das erste Glied 13 in etwa mittig an dem zweiten Glied 13 gelenkig angeschlagen ist, ist an dem anderen Ende des zweiten Glieds 13 das Getriebe 12 angeordnet. Die einzelnen Glieder 13 können beispielsweise aus Stahl oder einer Stahllegierung ausgebildet sein.

Das Getriebe 12 umfasst eine in etwa dreieckförmige Aufhängung 15, an welcher einerseits das entsprechende Reibrad 10 der Vorrichtung 6 angeordnet ist und andererseits ein Getrieberad 16 angeordnet ist. Das Getrieberad 16 weist eine Lauffläche 17 auf. Im aktivierten Zustand der Vorrichtung 6 liegt die Lauffläche 17 des Getrieberads 16 einerseits an der Lauffläche 18 des entsprechenden Schienenrads 3 und andererseits an der Lauffläche 11 des entsprechenden Reibrads 10 an.

Die dreieckförmige Aufhängung 15 ist dabei derart an dem anderen Ende des zweiten Glieds 13 angebracht, dass relativ zum zweiten Glied 13 eine geringfügige Rotation möglich ist. Damit ist einerseits der Kontakt zwischen Schiene 5 und Schienenrad 3 gewährleistet, aber gleichzeitig ist die Rotation so begrenzt, dass sich die Aufhängung 15 nicht aus dem Kontakt rausdrehen kann. Insbesondere kann auch nicht das Reibrad 10 seinen Kontakt zum Schienenrad 3 verlieren und/oder Kontakt zur Schiene 5 bekommen.

Die dreieckförmige Aufhängung 15 weist eine Feder 22 auf, die derart angeordnet ist, dass durch die von ihr bewirkte Federkraft das Getrieberad 16 und das Reibrad 10 im deaktivierten Zustand der Vorrichtung 6 voneinander getrennt sind. Werden das Reibrad 10 und das Getrieberad 16 im aktivierten Zustand der Vorrichtung 6 zwischen Schienenrad 3 und Schiene 5 eingepresst, nähern sich Reibrad 10 und Getrieberad 16 dann gegen die Rückstellkraft der Feder 22 aneinander an bis sie sich berühren und dann kraftschlüssig miteinander verbunden sind.

Im aktivierten Zustand ist somit das Reibrad 10 über das Getrieberad 16 des Getriebes 12 mechanisch mit dem entsprechenden Schienenrad 3 kraftschlüssig gekoppelt. Es ist gleichzeitig sichergestellt, dass das Schienenrad 3 und das entsprechende Reibrad 10 die gleiche Laufrichtung und dieselbe Bahngeschwindigkeit aufweisen.

Durch das erste Glied 13 der Reibradaufhängung 9, also durch den teleskopierbaren Zylinder, kann die Verbindung zwischen dem Getrieberad 16 und dem Schienenrad 3 mittels Einfahren des Zylinders hergestellt bzw. mittels Ausfahren des Zylinders gelöst werden. Insofern ist durch das erste Glied 13 eine Verlagerung der Reibradaufhängung 9 zwischen Ruheposition und Einsatzposition gewährleistet, wobei dieses Glied 13, also der teleskopierbare Zylinder, auch als ein Verlagerungsantrieb bezeichnet werden kann. Durch dieses Glied 13 ist insofern ebenfalls die Anpresskraft des entsprechenden Reibrads 10 an die entsprechende Schiene 5 bewirkbar. Die Anpresskraft ist dabei durch die Einstellung des ersten Gliedes 13 der Vorrichtung 6, also des teleskopierbaren Zylinders, anpassbar.

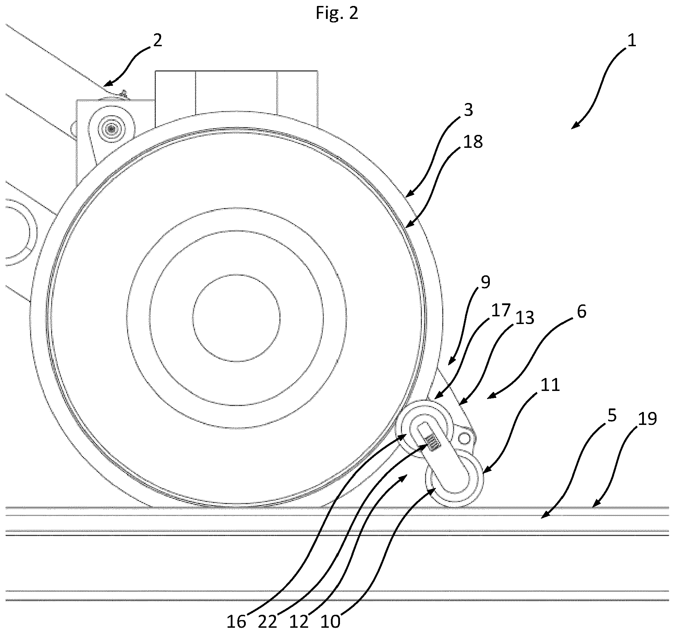

Fig. 2 zeigt einen Ausschnitt des Fahrzeuges 1 nach Fig. 1 in einer Seitenansicht. Insofern zeigt Fig. 2 ein Schienenrad 3 des Fahrzeuges 1 aufstehend auf seiner entsprechenden Schiene 5 und eine Vorrichtung 6, wobei die Vorrichtung 6 sich im aktivierten Zustand befindet.

Insofern ist das Getrieberad 16 des Getriebes 12 mit seiner Lauffläche 17 anliegend an der Lauffläche 18 des Schienenrads 3. Das Reibrad 10 der Vorrichtung 6 wird auf die entsprechende Schiene 5, insbesondere auf die Lauffläche 19 der Schiene 5 angepresst. Es besteht eine kraftschlüssige Verbindung zwischen dem Schienenrand 3 und dem Reibrad 10 mittels des Getrieberads 16 und weiterhin besteht eine kraftschlüssige Verbindung zwischen dem Reibrad 10 und der entsprechenden Schiene 5. Insofern wird die Haftung des Fahrzeuges 1 auf der Schiene 5 erhöht. Der Reibungskoeffizient der Lauffläche 11 des Reibrades 10 kann höher sein als der des Schienenrads 3, wodurch die Erhöhung der Haftung des Fahrzeuges 1 weiter gesteigert werden kann.

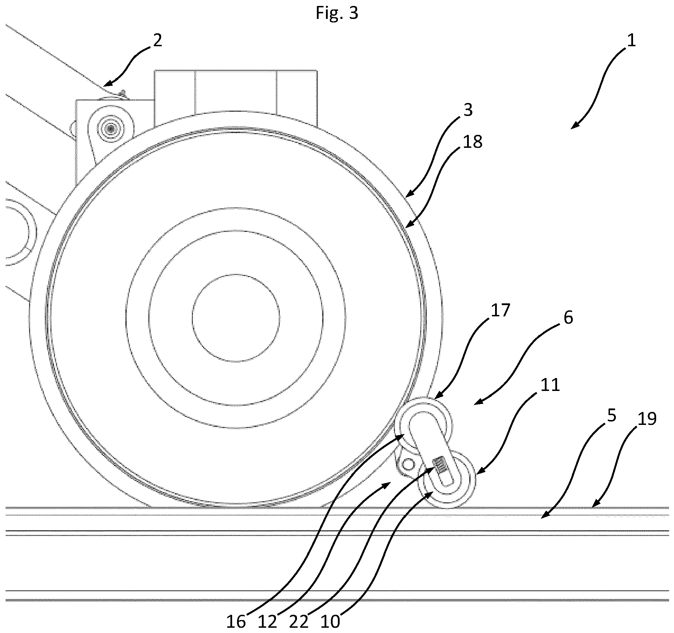

Fig. 3 zeigt ein zweites Ausführungsbeispiel eines erfindungsgemäßen Fahrzeuges 1, bei dem im Gegensatz zu der in dem Ausführungsbeispiel nach den Fig. 1 und 2 gezeigten Ausrichtung der dreieckförmigen Aufhängung 15 eine umgekehrte Ausrichtung realisiert ist. Somit ist die Spitze der dreieckförmige Aufhängung 15, an der das andere Ende des zweiten Glieds 13 angebracht ist, näher zur Schiene 5 vorgesehen als die Basis der dreieckförmige Aufhängung 15. Somit wird ein Herausdrehen der dreieckförmigen Aufhängung 15 aus den beiden Kontaktflächen sicher vermieden.

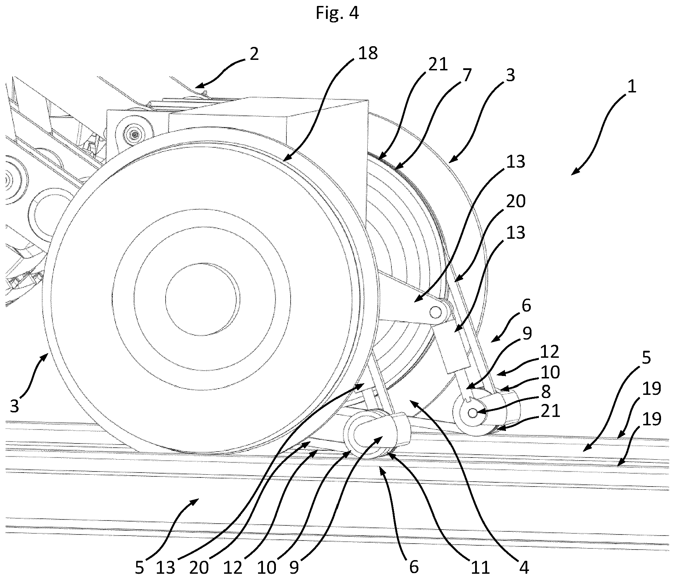

Fig. 4 zeigt ein weiteres Ausführungsbeispiel eines erfindungsgemäßen Fahrzeuges 1, welches sich insbesondere in der Ausgestaltung der Vorrichtungen 6 von dem Ausführungsbeispiel nach den Fig. 1 und 2 unterscheidet.

Insofern ist die Reibradaufhängung 9 der jeweiligen Vorrichtung 6 mehrgliedrig ausgestaltet, wobei das erste Glied 13 als starrer, an dem Fahrgestell 2 angeschlagener Steg ausgestaltet ist und das zweite Glied 13 als teleskopierbarer Zylinder, beispielsweise als Hydraulikzylinder. An dem zweiten Glied 13 ist das Reibrad 10 der Vorrichtung 6 angeordnet. Beide Vorrichtungen 6 befinden sich im aktivierten Zustand. Die jeweiligen Verbindungen zwischen dem ersten Glied 13 und dem zweiten Glied 13 einerseits sowie dem zweiten Glied 13 und der Reibradaufhängung 9 andererseits sind dabei jeweils als Übermaßpassung 8 ausgebildet.

Das Getriebe 12 ist als Riemengetriebe ausgebildet. Insofern umfasst das Getriebe 12 einen Riemen 20, der als Flachriemen und ohne Zähne ausgebildet ist. Der Riemen 20 jeder Vorrichtung 6 ist sowohl dem Reibrad 10 dieser Vorrichtung 6 als auch dem entsprechenden Schienenrad 3 zugeordnet. Insofern umfassen sowohl das Reibrad 10 als auch das Schienenrad 3 eine geeignete Riemen-Lauffläche 21 für den Riemen 20. Die Riemen-Lauffläche 21 des Schienenrads 3 ist in einer Nut 7 in einem dafür vorgesehenen Teilbereich des Schienenrads 3 vorgesehen. Die Riemen-Lauffläche 21 des Reibrads 10 ist in einer Nut 7 in einer dafür vorgesehenen und an das Reibrad 10 angeschlossenen, in der Zeichnung nicht dargestellten, Welle vorgesehen.

Im aktivierten Zustand ist durch den Riemen 20 das Reibrad 10 mit dem Schienenrad 3 kraftschlüssig gekoppelt. Durch die Anpassungen der Durchmesser der jeweiligen Riemen-Lauffläche 21 ist gleichzeitig sichergestellt, dass das Schienenrad 3 und das entsprechende Reibrad 10 die gleiche Laufrichtung und dieselbe Bahngeschwindigkeit aufweisen. Durch das zweite Glied 13 der Reibradaufhängung 9, also durch den teleskopierbaren Zylinder, kann der Riemen 20 gespannt oder gelockert werden und das Reibrad 10 in Kontakt mit der entsprechenden Schiene 5 gebracht werden bzw. der Kontakt aufgehoben werden. Insofern ist durch das zweite Glied 13 eine Verlagerung des Reibrades 10 zwischen Ruheposition und Einsatzposition gewährleistet, wobei dieses Glied 13, also der teleskopierbare Zylinder, auch als ein Verlagerungsantrieb bezeichnet werden kann. Dieses Glied 13 bewirkt insofern ebenfalls die Anpresskraft des entsprechenden Reibrads 10 an die entsprechende Schiene 5. Die Anpresskraft ist insofern auch anpassbar, abhängig von der Einstellung des ersten Gliedes 13 der Vorrichtung 6, also des teleskopierbaren Zylinders.

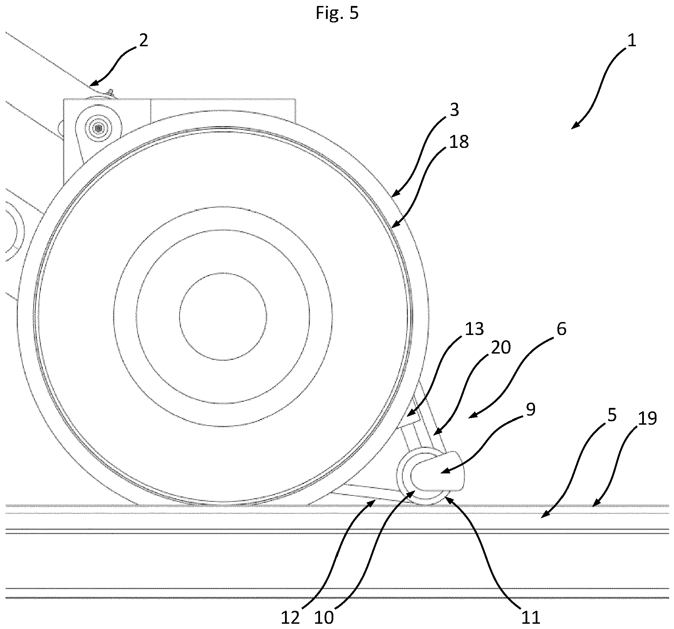

Fig. 5 zeigt einen Ausschnitt des Fahrzeuges 1 nach Fig. 3 in einer Seitenansicht. Insofern zeigt Fig. 4 ein Schienenrad 3 des Fahrzeuges 1 aufstehend auf seiner entsprechenden Schiene 5 und eine Vorrichtung 6, wobei die Vorrichtung 6 sich im aktivierten Zustand befindet.

Dabei ist das Reibrad 10 der Vorrichtung 6 auf die Lauffläche 19 der entsprechenden Schiene 5, angepresst. Es besteht eine kraftschlüssige Verbindung zwischen dem Schienenrand 3 und dem Reibrad 10 mittels des Riemens 20, und weiterhin besteht eine kraftschlüssige Verbindung zwischen dem Reibrad 10 und der entsprechenden Schiene 5. Insofern wird die Haftung des Fahrzeuges 1 auf der Schiene 5 erhöht. Der Reibungskoeffizient der Lauffläche 11 des Reibrades 10 kann höher sein als der des Schienenrads 3, wodurch die Erhöhung der Haftung des Fahrzeuges 1 weiter gesteigert werden kann.

## Patentansprüche

1. Fahrzeug (1) für den Betrieb auf Schienen (5), vorzugsweise Zweiwegefahrzeug, umfassend ein Fahrgestell (2) und zumindest zwei an diesem Fahrgestell (2) aufgehängte, für den Betrieb auf Schienen (5) geeignete und mittels zumindest eines Antriebs antreibbare und/oder mittels wenigstens einer Bremsvorrichtung bremsbare Schienenradpaare (4) mit jeweils zwei Schienenrädern (3), **dadurch gekennzeichnet, dass** wenigstens einem Schienenrad (3), vorzugsweise jedem Schienenrad (3) eines Schienenradpaares (4), und besonders bevorzugt jedem Schienenrad (3), jeweils zumindest eine Vorrichtung (6) zur Erhöhung der Haftung des Fahrzeugs (1) auf der entsprechenden Schiene (5) zugeordnet ist, die für eine zeitweise Erhöhung der Haftung zwischen einem deaktivierten Zustand und einem aktivierten Zustand umschaltbar ist, und die eine an dem Fahrgestell (2) angeordnete Reibradaufhängung (9) mit einem daran aufgehängten Reibrad (10) mit umlaufender Lauffläche (11) umfasst, wobei das Reibrad (10) einerseits zumindest im aktivierten Zustand der Vorrichtung (6) einen mit seiner Lauffläche (11) an die entsprechende Schiene (5) angepresst ist und außerdem durch ein Getriebe (12) unmittelbar oder mittelbar mit dem Schienenrad (3), dem das Reibrad (10) zugeordnet ist, derart mechanisch gekoppelt ist, dass das Schienenrad (3) und das ihm zugeordnete Reibrad (10) jeweils dieselbe Bahngeschwindigkeit und dieselbe Drehrichtung haben, und wobei das Reibrad (10) andererseits im deaktivierten Zustand der Vorrichtung (6) entweder nicht an der entsprechenden Schiene (5) anliegt und/oder nicht durch das Getriebe (12) angetrieben ist.

2. Fahrzeug (1) nach dem vorhergehenden Anspruch, **dadurch gekennzeichnet, dass** zumindest eine Vorrichtung (6) zwischen einer Ruheposition, in der sie sich im nicht aktivierten Zustand befindet, und einer Einsatzposition, in der sie sich im aktivierten Zustand befindet, verlagerbar ist, wobei das Reibrad (10) bei der Einsatzposition an der entsprechenden Schiene (5) anliegt und bei der Ruheposition nicht an der entsprechenden Schiene (5) anliegt.

3. Fahrzeug (1) nach dem vorhergehenden Anspruch, **dadurch gekennzeichnet, dass** bei wenigstens einer Vorrichtung (6) für die Verlagerung der Reibradaufhängung (9) zwischen Ruheposition und Einsatzposition ein Verlagerungsantrieb vorgesehen ist.

4. Fahrzeug (1) nach dem vorhergehenden Anspruch, **dadurch gekennzeichnet, dass** der Verlagerungsantrieb die Anpresskraft des entsprechenden Reibrads (10) bewirkt und vorzugsweise die Anpresskraft des entsprechenden Reibrads (10) durch den Verlagerungsantrieb anpassbar ist.

5. Fahrzeug (1) nach einem der Ansprüche 3 und 4, **dadurch gekennzeichnet, dass** wenigstens eine Reibradaufhängung (9) schwenkbar und/oder teleskopierbar ausgeführt ist.

6. Fahrzeug (1) nach einem der Ansprüche 3 bis 5, **dadurch gekennzeichnet, dass** eine Steuereinheit vorgesehen ist, die mit zumindest einem Verlagerungsantrieb derart verbunden ist, dass dieser Verlagerungsantrieb durch diese Steuereinheit ansteuerbar ist.

7. Fahrzeug (1) nach dem vorhergehenden Anspruch, **dadurch gekennzeichnet, dass** eine mit der Steuereinheit verbundene Recheneinheit vorgesehen ist und wenigstens eine mit der Recheneinheit verbundene Sensoreinheit vorgesehen ist, wobei zum einen zumindest eine Sensoreinheit zur Ermittlung von Betriebsparametern ausgebildet ist und zum anderen die Recheneinheit zur Ermittlung von Sollwerten für die Steuereinheit ausgebildet ist, und wobei die Ermittlung von Sollwerten abhängig von den durch die Sensoreinheit erfassten Betriebsparametern erfolgt.

8. Fahrzeug (1) nach einem der vorhergehenden Ansprüche, **dadurch gekennzeichnet, dass** bei wenigstens einem Reibrad (10) der Reibungskoeffizient der Lauffläche (11) höher ist als bei dem Schienenrad (3), dem dieses Reibrad (10) zugeordnet ist.

9. Fahrzeug (1) nach einem der vorhergehenden Ansprüche, **dadurch gekennzeichnet, dass** bei wenigstens einem Reibrad (10) die Lauffläche (11) zumindest teilweise mit einer den Reibungskoeffizienten der Lauffläche (11) erhöhenden Beschichtung versehen ist oder durch eine solche Beschichtung gebildet ist.

10. Fahrzeug (1) nach einem der vorhergehenden Ansprüche, **dadurch gekennzeichnet, dass** bei wenigstens einem Reibrad (10) zumindest die Lauffläche (11) des Reibrads (10) aus Gummi besteht und/oder durch eine Beschichtung, wie z. B. einer Gummibeschichtung, gebildet ist.

11. Fahrzeug (1) nach einem der vorhergehenden Ansprüche, **dadurch gekennzeichnet, dass** zumindest ein Getriebe (12) ein eine Lauffläche (17) aufweisendes Getrieberad (16) umfasst, wobei das Getrieberad (16) zumindest im aktivierten Zustand der Vorrichtung (6) mit seiner Lauffläche (17) einerseits an der Lauffläche (18) des entsprechenden Schienenrads (3) anliegt und andererseits an der Lauffläche (11) des entsprechenden Reibrads (10) anliegt, so dass das Reibrad (10) dann über das Getrieberad (16) mit dem Schienenrad (3) kraftschlüssig gekoppelt ist.

12. Fahrzeug (1) nach einem der vorhergehenden Ansprüche, **dadurch gekennzeichnet, dass** zumindest ein Getriebe (12) einen Riemen (20) umfasst und sowohl das entsprechende Reibrad (10) als auch das entsprechende Schienenrad (3), dem das Reibrad (10) zugeordnet ist, jeweils mit einer geeigneten Riemen-Lauffläche (21) versehen oder gekoppelt sind, auf der der Riemen (20) zumindest im aktivierten Zustand der Vorrichtung (6) jeweils läuft, so dass das Reibrad (10) dann über den Riemen (20) mit dem Schienenrad (3) kraftschlüssig gekoppelt ist.

13. Fahrzeug (1) nach einem der vorhergehenden Ansprüche, **dadurch gekennzeichnet, dass** zumindest ein Getriebe (12) als Zahnradgetriebe ausgebildet ist und sowohl das entsprechende Reibrad (10) als auch das entsprechende Schienenrad (3), dem das Reibrad (10) zugeordnet ist, jeweils mit einem geeigneten Zahnrad versehen oder gekoppelt sind, auf denen das Zahnradgetriebe zumindest im aktivierten Zustand der Vorrichtung (6) jeweils läuft, so dass das Reibrad (10) dann über das Zahnradgetriebe mit dem Schienenrad (3) formschlüssig gekoppelt ist.

14. Fahrzeug (1) nach einem der vorhergehenden Ansprüche, **dadurch gekennzeichnet, dass** die Lauffläche (11) wenigstens eines Reibrads (10) im aktivierten Zustand an die Lauffläche (19) der entsprechenden Schiene (5) und/oder eine Flanke der entsprechenden Schiene (5) angepresst ist.

15. Fahrzeug (1) nach einem der vorhergehenden Ansprüche, **dadurch gekennzeichnet, dass** der Durchmesser wenigstens eines Reibrads (10) 5 % bis 50 %, vorzugsweise 10 % bis 25 %, besonders bevorzugt 15 % bis 20 %, des Durchmessers des entsprechenden Schienenrads (3), dem das Reibrad (10) zugeordnet ist, beträgt.

16. Fahrzeug (1) nach einem der vorhergehenden Ansprüche, **dadurch gekennzeichnet, dass** wenigstens eine Vorrichtung (6) mehr als einem Schienenrad (3) zugeordnet ist.
